# EUROPEAN PATENT APPLICATION

(11) **EP 0 596 425 A1**
(43) Date of publication of application: **11.05.1994**
(21) Application number: 93117586.3
(22) Date of filing: 29.10.1993
(51) Int. Cl.: F16K 13/00, B65D 47/24

(54) **Chemical storage and dispensing system**

(30) Priority: 04.11.1992 US 971747
(71) Applicant: AIR PRODUCTS AND CHEMICALS, INC., Allentown, PA 18195-1501 (US)
(72) Inventor: Randtke, Peter T., La Costa, CA 92009 (US); Matthews, James Clifford, Vista, CA 92083 (US)
(74) Representative: Schwabe - Sandmair - Marx

(57) **Abstract**

A reservoir and withdrawal assembly for transporting and dispensing fluids subject to degradation if contacted with a moisture or other chemicals or gases the reservoir (10) sealed by a frangible metal seal fixed to said fitting or sealed by a removable frangible seal fixed to the reservoir by a removable valve assembly (26). In either embodiment a valve assembly (26) is used to penetrate the seal (110) to gain access to the stored chemical.

## Description

### FIELD OF THE INVENTION

This invention pertains to a system comprising a reservoir and a control valve fitted to the reservoir for the storage, delivery and dispensing of volatile chemicals in either liquid form or solid form.

### BACKGROUND OF THE INVENTION

In the manufacture of semi-conductors it is known to react a silicon wafer, appropriately prepared with the semi-conductor component pattern thereon with a vapor from liquid source materials or dopants. Among these liquid source materials are boron tribromide, phosphorus oxychloride, phosphorous tribromide, silicon tetrabromide, arsenic trichloride, arsenic tribromide, antimonypentach- loride, trichloroethane, diethylsilane, t-butylsilane, alkylazidosilane, arylazidosilane, arylal- kylazidosilane, oligomeric siloxanes, and mixtures thereof.

One problem with using source materials of the type noted above is that they are subject to degradation if they come in contact with air or air and moisture or other atmospheric gases or other chemicals during storage, shipment and use. Some of the reactants or dopants are reactive with materials that would otherwise be used for reservoirs or dispensing devices.

The standard method of handling chemicals for semiconductor manufacture is using a quartz bubbler of the type shown in U.S. Patent 4,134,514 or U.S. Patent 4,298,037 which are offered to the trade by the Schumacher unit of Air Products and Chemicals, Inc. in Carlsbad, California. Such bubblers are used in conjunction with a chemical refill system such as shown in U.S. Patent 4,859,375 also available from the Schumacher unit of Air Products and Chemicals, Inc.

The chemical refill system and the bubblers offered to the semi-conductor industry are constructed so that once the reagent is placed inside either the refill bottle or the bubbler and the refill bottle bubbler is sealed, the reagent can be shipped to a point of use where the user invades the reservoir or the bubbler to gain access to the chemical in accord with well known techniques and equipment.

One of the problems with the quartz or glass reservoirs and bubblers conventionally used are their susceptibility to breakage if extreme care is not used during the filling, transport and dispensing of the contained liquids. Furthermore, the industry is moving toward the use of metal containment and dispensing devices made generally from metals impervious to the chemicals, such as stainless steel.

### SUMMARY OF THE INVENTION

The present invention pertains to a system for transporting, storing and dispensing at a point of use, chemicals subject to degradation if contacted with air, moisture, atmospheric gases and other chemicals, the system comprising a metallic reservoir having a fill/dispensing port which can be sealed by a metallic break seal. The reservoir and seal are constructed of material impervious to contamination by atmospheric gases and other chemicals normally seen by such reservoir during the filling, transport, or dispensing at the point of use activities for the container. The break seal is penetrated or destroyed by a metallic valve fitted to the inlet/outlet port of the reservoir. As an alternative embodiment, the break seal can be held in place by the valve assembly which is installed at the time the reservoir is filled and shipped with the reservoir as a system or single unit.

### BRIEF DESCRIPTION OF THE DRAWING

Figure 1 is a cross-sectional schematic representation of the system according to the present invention.
Figure 2 is the system of Figure 1 showing actuation of the valve stem.
Figure 3 is a fragmentary view of the system Figure 1 showing the valve in the open position.
Figure 4 is a fragmentary view of the system the system Figure 1 showing the valve terminating withdrawal of fluid from the reservoir.
Figure 5 is a cross-sectional schematic representation of an alternate embodiment of the present invention.
Figure 6 is a view similar to that of Figure 5 showing the valve in a position after puncturing the break seal.
Figure 7 is a fragmentary view of the device of Figure 5 showing the valve in position for withdrawal of fluid from reservoir.
Figure 8 is a fragmentary view identical to Figure 7 showing the flow of fluid from the reservoir being impeded.

### DETAILED DESCRIPTION OF THE INVENTION

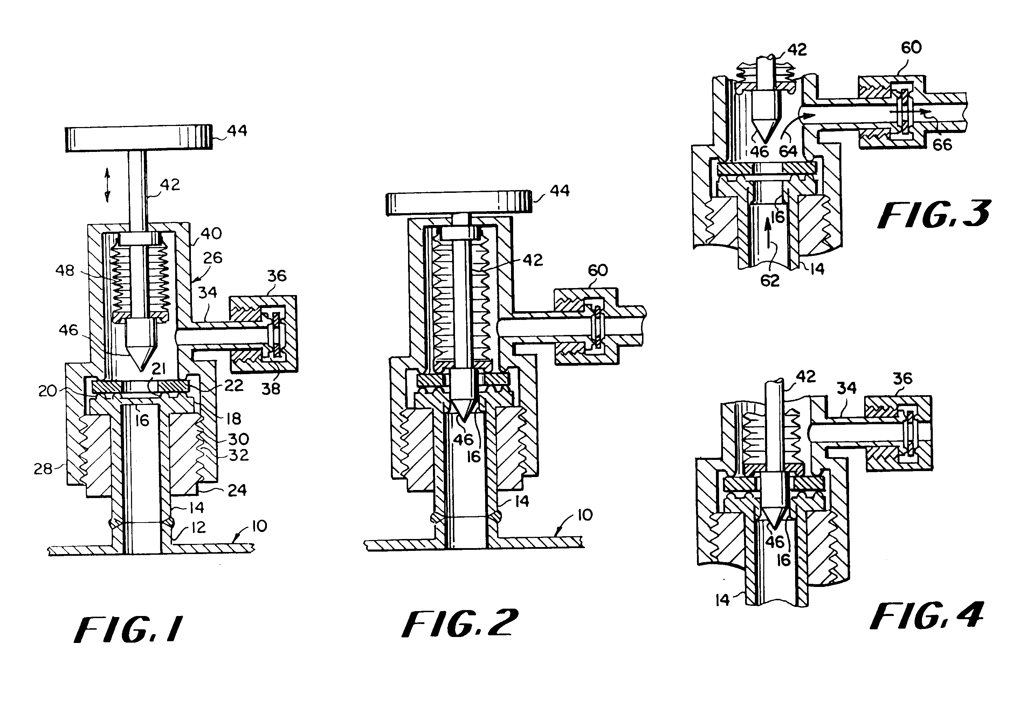

Since reservoirs can come in many shapes and sizes, one being the general shape of the well known carboy. Figure 1 of the drawing shows the reservoir as 10 as a fragment of the wall of the reservoir. Fitted to reservoir 10 is an inlet/outlet fitting 12. Dispose on the inlet/outlet fitting 12 and in fluid communication with the interior of the reservoir 10 is a valve adapter or inlet/outlet fitting extender 14 which is closed by a metal break seal 16 fitted to a flange 18 disposed on one end of the valve adapter or inlet/outlet extender 14 as shown in the drawing. Break seal 16 can be fitted to the extender 14 as by welding or by being crimped around the flange 18 by manufacturing techniques that are well known in the art. Break seal 16 can include annular surface protrusions 20 and 21 which are adapted to receive a valve seat gasket 22. Prior to installation of the extender 14 to the reservoir 10, a valve adapter nut 24 which bears against flange 18 is placed around the circumference of the extender 14. Valve nut 24 is adapted to receive valve assembly 26 which includes a lower body portion 28 containing threads which are threads 30, which are complementary to threads 32 on the nut 24. Lower valve body 28 is so constructed and arranged that when the valve body is fixed to the nut 32, the sealing gasket 22 is clamped to the metal gasket 16 as shown in the drawing. Valve assembly 26 includes an outlet fitting 34 with a impermeable cap 36 over a connecting flange 38 so that the valve can be connected to a vacuum system used in semi-conductor manufacturing, as is well known in the art. Valve assembly 26 includes an upper body portion 40 containing a valve stem 42 and valve stem actuator in the form of a hand wheel 44, or a like device. Disposed on the lower portion of valve stem 42 which is inside of the upper housing 40 is a sharpened end of or a penetrator 46 fixed to the valve stem 42. Surrounding the portion of the valve stem 42 disposed inside of the housing portion 40 is a flexible metal bellows 48 which contains leakage into the valve assembly around the stem 42 projecting through the housing 40 during the travel of the stem inside the housing.

As shown in Figure 2, when the fitting 36 is replaced with a connector 60, thus placing the reservoir 10 into a system for dispensing the contained chemical into a low pressure chemical vapor deposition apparatus via the fitting 60, the valve stem 42 can be moved in a downward position by rotating the hand wheel 44 to cause the penetrator 46 to rupture the metal break seal 16. As shown in Figure 3, when the valve stem is raised so that the penetrator 46 is withdrawn from the break seal 16 chemical can be withdrawn from the reservoir 10 as shown by arrows 62, 64, 66 and directed into the semi-conductor manufacturing apparatus through the fitting 60.

If it is desired to terminate use of the contained chemical prior to completely withdrawing the chemical from the reservoir 10, the stem 42 can be rotated so the pointer 46 contacts the break seal 16 thus terminating flow of chemical through the extender 14 and conduit 34. At the same time the outlet conduit 34 can be closed by cap 36. This same procedure can be used once the chemical is completely withdrawn for preparing the reservoir 10 to be returned for refilling.

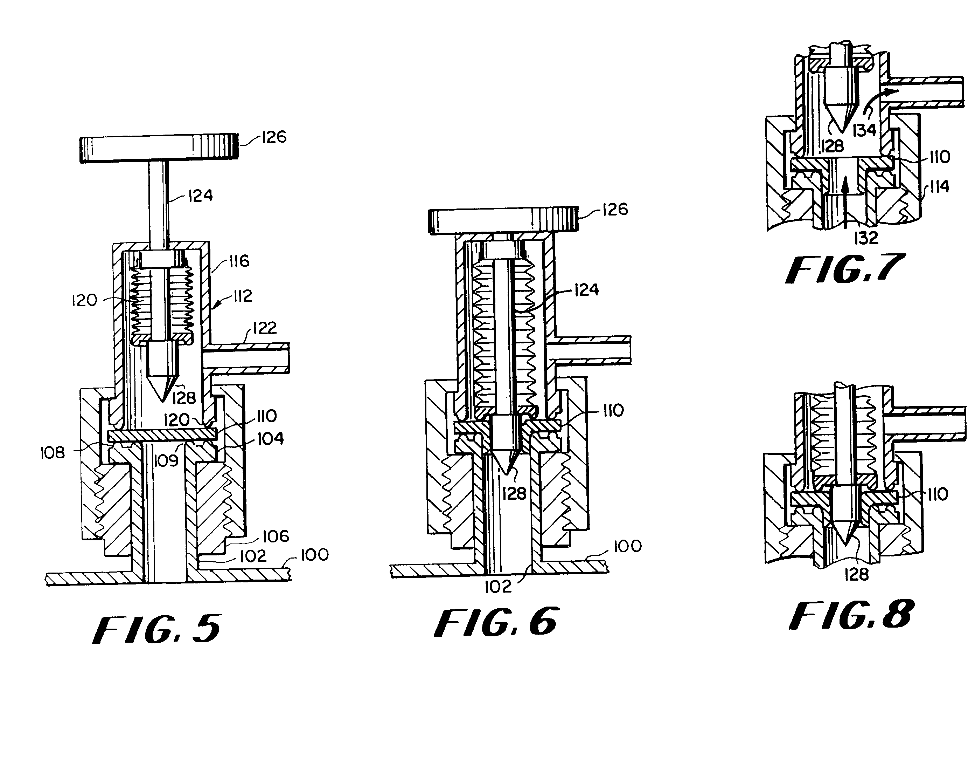

As shown in Figure 5, the invention includes a reservoir 100 with an inlet/outlet fitting 102, terminating in a flange 104. Disposed around the inlet/outlet fitting 102 is a valve adapter 106. The flange 104 can contain annular protrusions 108 , 109 to support a metal break seal disc 110 which is held in place by a combination of the valve assembly 112, having a lower body portion 114, threadably mounted on adapter 106 and an upper body portion 116 with a lower end 120 which bears against the break seal 110 and forces it into sealing engagement with the flange 104 on the projecting end of the inlet/outlet fitting 102 as shown in the drawing. Valve assembly 112 includes an outlet port 122 which can have a vacuum fitting such as shown in Figures 1, 2, and 4. Valve assembly 112 includes a valve stem 124 and actuating wheel 126, the valve stem extending into the valve housing 116 and terminating in a penetrator 128 which is adapted to fracture the break seal 110. A fluid tight flexible bellows arrangement 30 such as used in the valve in Figure 1 is included in this construction.

When the reservoir is filled and the break seal 110 is assembled to the inlet/outlet fitting 102 by means of the valve assembly 112 as is shown and the reservoir is ready to be used to dispense the contained chemical, the valve stem 124 can be lowered to cause the pointer or penetrator 128 to penetrate the break seal 110 as shown in Figure 6. When the pointer is raised to its previous position as shown in Figure 7, chemical can be removed from the reservoir and conducted to a point of use as shown by the arrows 132 and 134. After the chemical has been withdrawn from the reservoir, the pointer 128 can be lowered to contact the break seal 110 and seal off the reservoir for later continuation of withdrawal or, in the case of complete withdrawal of the chemical set up the reservoir for return for refilling.

The preferred materials for construction for the reservoir valve and the break seal is stainless steel. In the device of Figure 1-4, the break seal 18 is preferably made of a thin metal membrane .002- .005 inches thick, which can be orbitally welded by the tungsten inert gas (TIG) welding process to the flange 18. In the case of the apparatus of Figures 5 through 7, the break seal disc is fabricated so that it is thinned to less than 0.1 inches in the center to effect puncture by the penetrator or pointer 128. Use of materials of construction such as stainless steel will permit the storage, transport and dispensing of reagents without fear of atmospheric air, moisture or other gases or chemicals penetrating the reservoir and degrading the chemical inside.

Having thus described our invention what is desired to be secured by letters patent of the United States is set forth in the appended claims.

## Claims

1. A system for transporting and dispensing fluids subject to degradation if contacted with air and/or moisture comprising in combination:
a metallic reservoir fabricated from a material that is unreactive to the fluid to be contained therein said metal of said reservoir being impervious to ingress of air, moisture or other unwanted chemicals or gases;
an inlet/outlet fitting on said reservoir said fitting projecting from said reservoir and being closed by a frangible metal seal impervious to attack by the material inside said reservoir and impervious to air or moisture;
valve means adapted to be disposed around said inlet/outlet fitting in a manner to prevent air or moisture from entry into said valve; and
means fixed to a valve stem in said valve means to penetrate said frangible metal seal said penetration means and said metal seal cooperating to regulate withdrawal of fluid from said reservoir said valve means including a valve stem positionable juxtaposed to said seal said stem adapted to puncture said seal;
means to move said valve stem into contact and through said seal and withdraw said stem from said punctured seal;
means to evacuate said valve means prior to puncturing said seal, said means adaptable to withdraw fluid from said reservoir; and
means to utilize said valve stem to seal said puncture in said seal when the contents of said reservoir are not needed for use or when said reservoir is empty in order to prevent ingress of ambient atmosphere into said reservoir.

2. A system according to Claim 1 wherein said valve means include a valve seat seal gasket removably fixed to said inlet/outlet fitting juxtaposed to said frangible metal seal.

3. A system according to Claim 1 wherein said valve means include bellows sealing means to prevent leakage into or out of said valve means around said valve stem.

4. A system according to Claim 1 wherein said valve includes an outlet fitting with a vacuum gland closure thereon.

5. A system according to Claim 1 wherein said valve is fabricated from stainless steel.

6. A system according to Claim 1 wherein said reservoir and the frangible metal seal are fabricated from stainless steel.

7. A system for transporting and dispensing fluids subject to degradation if contacted with air and/or moisture comprising in combination:
a metallic reservoir fabricated from a material that is unreactive to the fluid to be contained therein said metal of said reservoir being impervious to ingress of air, moisture or other unwanted chemicals or gases;
an inlet/outlet fitting on said reservoir adapted to receive a removable fluid withdrawal control valve;
a valve assembly removably fitted on said fitting, said valve assembly adapted to position and hold a frangible closure member in fluid tight relationship with said reservoir to prevent ingress of fluid during transporting and handling of said reservoir prior to use and to prevent ingress of moisture, air or unwanted gases or chemicals into said reservoir.

8. A system according to Claim 7 wherein said reservoir is fabricated from stainless steel.

9. A system according to Claim 7 wherein said frangible closure is fabricated from stainless steel.

10. A system according to Claim 7 wherein said valve assembly includes means fixed to a valve stem to penetrate and form an aperture in said closure member.

11. A system according to Claim 8 wherein said valve assembly includes bellows sealing means to prevent leakage into or out of said valve means around said valve stem.

12. A system according to claim 7 wherein said valve assembly is fabricated from stainless steel.
